# EUROPEAN PATENT APPLICATION

(11) **EP 3 648 486 A1**
(43) Date of publication of application: **06.05.2020**
(21) Application number: 18840801.7
(22) Date of filing: 30.05.2018
(51) Int. Cl.: H04W 4/06, H04W 4/70, H04W 4/80, H04W 52/02

(54) **METHOD AND DEVICE FOR TRANSMITTING DATA**

(30) Priority: 31.07.2017 CN 201710644068
(71) Applicant: Huawei Technologies Co., Ltd., Longgang District Shenzhen, Guangdong 518129 (CN)
(72) Inventor: WANG, Jing, Shenzhen, Guangdong 518129 (CN); LIN, Bo, Shenzhen, Guangdong 518129 (CN)
(74) Representative: Gill Jennings & Every LLP
(86) International application number: PCT/CN2018/089104
(87) International publication number: WO 2019/024590

(57) **Abstract**

A data transmission method and a device is provided. The method includes: receiving, by a first terminal device on a broadcast channel, a broadcast message sent by a second terminal device; sending, by the first terminal device, a first acknowledgment message to the second terminal device on the broadcast channel, where the first acknowledgment message is a response message indicating that the first terminal device successfully receives the broadcast message; obtaining, by the first terminal device, first data carried in the broadcast message when determining that the broadcast message carries the first data; and reporting, by the first terminal device, the first data to a corresponding application server. According to the method and the device in this application, signaling overheads of a device can be reduced.

## Description

This application claims priority to Chinese Patent Application No. 201710644068.7, filed with the Chinese Patent Office on July 31, 2017 and entitled "DATA TRANSMISSION METHOD AND DEVICE", which is incorporated herein by reference in its entirety.

### TECHNICAL FIELD

This application relates to the field of wireless communications technologies, and in particular, to a data transmission method and a device.

### BACKGROUND

As Internet rapidly develops, the internet of things (internet of things, IoT) emerges accordingly. In the internet of thing, all objects are connected through a network to implement intelligent identification, information exchange, and management of any object, any person, any time, and any place.

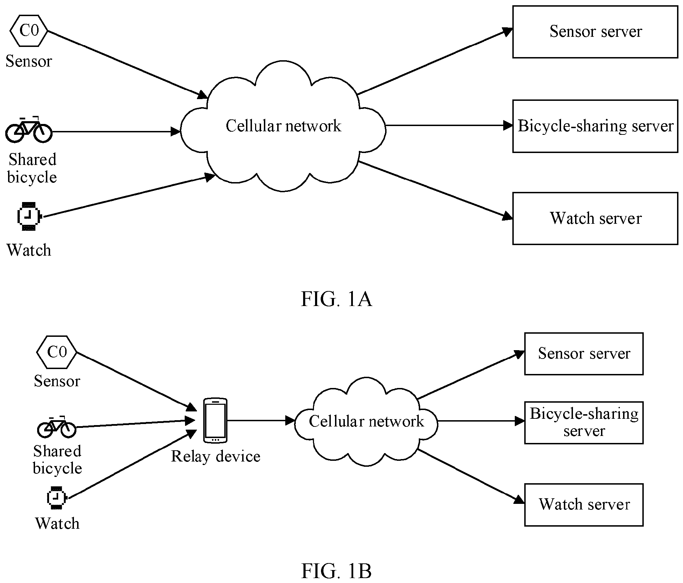

Currently, an entire internet of things system includes an internet of things device, a transmission network, and an application server. The internet of things device may report related data to the application server through the transmission network. For example, as shown in FIG. 1A, the entire internet of things system includes internet of things devices such as a shared bicycle, a sensor, and a watch, and the transmission network is a cellular network. The internet of things devices such as the shared bicycle, the sensor, and the watch may separately report, through the cellular network, respective related data to a bicycle-sharing server, a sensor server, and a watch server.

The internet of things device usually requires a low power consumption. Based on this, a related technician proposes a solution in which the internet of things device reports related data of the internet of things device to a corresponding application server by using a relay device (for example, a smartphone) as a relay. As shown in FIG. 1B, the foregoing example is still used, and the entire internet of things system includes the internet of things devices such as the shared bicycle, the sensor, and the watch. The foregoing internet of things devices may separately transmit respective data to the relay device (for example, the smartphone), and then the relay device reports, through the cellular network, the related data to corresponding application servers.

In the prior art, in the solution in which the related data of the internet of things device is reported to the application server by using the relay device, the internet of things device first needs to establish a connection to the relay device, and then transmit the related data to the relay device after the connection is established. However, a process in which the internet of things device establishes the connection to the relay device is as follows: First, the internet of things device sends broadcast information to search for the relay device. Then, connection establishment, security negotiation, pairing and binding, data synchronization, and the like are performed between the internet of things device and the relay device. Finally, after the internet of things device is connected to the relay device in the foregoing process, the internet of things device can transmit the related data to the relay device. It can be learned that, when the internet of things device and the relay device transmit data, the internet of things device first needs to establish a connection to the relay device. It can also be learned from the foregoing description that in the process in which the internet of things device establishes a connection to the relay device, a large amount of signaling interaction is required, resulting in relatively high signaling overheads of both the internet of things device and the relay device.

### SUMMARY

This application provides a data transmission method and a device to reduce signaling overheads of a device.

According to a first aspect, this application provides a data transmission method, and the method includes: receiving, by a first terminal device on a broadcast channel, a broadcast message sent by a second terminal device; sending, by the first terminal device, a first acknowledgment message to the second terminal device on the broadcast channel, where the first acknowledgment message is a response message indicating that the first terminal device successfully receives the broadcast message; obtaining, by the first terminal device, first data carried in the broadcast message when determining that the broadcast message carries the first data; and reporting, by the first terminal device, the first data to a corresponding application server.

It should be noted that, in this application, the first acknowledgment message is sent on the broadcast channel, so that the second terminal device may determine whether service data is successfully sent, and the second terminal device may determine to broadcast a previous service message or new service data. Finally, it becomes possible to transmit service data on the broadcast channel. In this application, the service data is directly transmitted on the broadcast channel without a need to pre-establish a connection between the first terminal device and the second terminal device, so that signaling overheads are reduced.

In a possible design, the broadcast message includes first indication information, and the first indication information is used to indicate whether the broadcast message carries the first data.

In a possible design, when the first terminal device receives the broadcast message on the broadcast channel in a Bluetooth low energy manner, the broadcast message is an advertising protocol data unit PDU, and the first acknowledgment message is a scanning request PDU, or the first acknowledgment message is an acknowledgment PDU.

In a possible design, the first indication information is at least one of a PDU type field, an advertising data type field, an advertising data field, an advertising data information field, and a universally unique identifier that are of the advertising PDU.

In a possible design, the receiving, by a first terminal device on a broadcast channel, a broadcast message sent by a second terminal device includes: receiving, by an air interface layer of the first terminal device on the broadcast channel, the broadcast message sent by the second terminal device.

In a possible design, the sending, by the first terminal device, a first acknowledgment message to the second terminal device on the broadcast channel includes: sending, by the air interface layer, the first acknowledgment message to the second terminal device on the broadcast channel after receiving the broadcast message.

In a possible design, the sending, by the first terminal device, a first acknowledgment message to the second terminal device on the broadcast channel includes: sending, by the air interface layer, broadcast data in the broadcast message to an upper layer of the first terminal device; sending, by the upper layer, second indication information to the air interface layer after receiving the broadcast data, where the second indication information is used to instruct the air interface layer to send the first acknowledgment message; and sending, by the air interface layer, the first acknowledgment message on the broadcast channel after receiving the second indication information.

It should be noted that, in this application, after the air interface layer of the first terminal device receives the broadcast message, the air interface layer directly sends, without an instruction from the upper layer, the first acknowledgment message indicating that the broadcast message is successfully received. Therefore, signaling interactions is relatively small, and communication efficiency is relatively high.

In a possible design, the reporting, by the first terminal device, the first data to a corresponding application server includes: reporting, by the first terminal device, the first data to the corresponding application server when receiving, on the broadcast channel, a second acknowledgment message sent by the second terminal device, where the second acknowledgment message is a response message indicating that the second terminal device successfully receives the first acknowledgment message.

It should be noted that, in this application, because the second terminal device sends the first data on the broadcast channel, a plurality of first terminal devices receive the first data, and correspondingly, the plurality of first terminal devices also send first acknowledgment messages for the first data. In this application, it may be designed that the second terminal device sends the second acknowledgment message only for a first acknowledgment message received initially, and that the first terminal device reports the first data only when receiving the second acknowledgment message. It can be learned that in this application, compared with a case in which the first terminal device reports first data to a server as soon as receiving the first data, one piece of first data is reported only once. According to the method in this application, a plurality of times of reporting the first data can be avoided, and power consumption of the first terminal device can be reduced.

In a possible design, the reporting, by the first terminal device, the first data to the corresponding application server when receiving, on the broadcast channel, a second acknowledgment message sent by the second terminal device includes: determining, by the first terminal device when receiving, on the broadcast channel, the second acknowledgment message sent by the second terminal device, whether the second acknowledgment message carries an identifier of the first terminal device; and reporting, by the first terminal device, the first data to the corresponding application server when determining that the second acknowledgment message carries the identifier of the first terminal device.

It should be noted that, in this application, because the second terminal device also sends the second acknowledgment message on the broadcast channel, correspondingly, the plurality of first terminal devices also receive the second acknowledgment message. The received identifier of the first terminal device is carried in the second acknowledgment message, so that the first terminal device may determine whether the second acknowledgment message is sent to the first terminal device. Therefore, the first terminal device is prevented from receiving a second acknowledgment message sent to another first terminal device and then reporting the first data, so that repeated reporting of the first data can be avoided, and power consumption of the first terminal device are reduced.

In a possible design, the obtaining, by the first terminal device, first data carried in the broadcast message when determining that the broadcast message carries the first data includes: sending, by the air interface layer, the broadcast data in the broadcast message to the upper layer of the first terminal device; obtaining, by the upper layer, the first data when determining that the broadcast data includes the first data; the sending, by the first terminal device, a first acknowledgment message to the second terminal device on the broadcast channel includes: sending, by the upper layer of the first terminal device, the second indication information to the air interface layer after the first terminal device reports the first data to the application server, where the second indication information is used to instruct the air interface layer to send the first acknowledgment message; and sending, by the air interface layer, the first acknowledgment message to the second terminal device on the broadcast channel after receiving the second indication information.

According to a second aspect, this application provides a data transmission method, and the method includes: sending, by a second terminal device, a broadcast message to a first terminal device on a broadcast channel, where the broadcast message carries first data, and the first data is to be reported by the second terminal device to an application server; and receiving, by the second terminal device, a first acknowledgment message on the broadcast channel, where the first acknowledgment message is a response message indicating that the first terminal device successfully receives the broadcast message.

It should be noted that, in this application, the second terminal device directly transmits service data on the broadcast channel without a need to pre-establish a connection to the first terminal device, so that signaling overheads are reduced.

In a possible design, the method further includes: sending, by the second terminal device, a second acknowledgment message to the first terminal device on the broadcast channel after receiving the first acknowledgment message, where the second acknowledgment message is a response message indicating that the second terminal device successfully receives the first acknowledgment message.

In a possible design, the method further includes: determining, by the second terminal device when receiving the first acknowledgment message, whether there is new broadcast data to be sent; sending, by the second terminal device, a new broadcast message when determining that there is new broadcast data to be sent, where the new broadcast message carries the new broadcast data; and stopping, by the second terminal device when determining that there is no new broadcast data to be sent, sending the broadcast message.

In a possible design, the stopping, by the second terminal device when determining that there is no new broadcast data to be sent, sending the broadcast message includes: when determining that there is no new broadcast data to be sent, stopping, by the second terminal device, sending the broadcast message, and powering off a transceiver; or when determining that there is no new broadcast data to be sent, stopping, by the second terminal device, sending the broadcast message, and entering a deep sleep state, where both a transceiver and a preset communications module of the second terminal device are powered off in the deep sleep state.

It should be noted that, in this application, after the second terminal device receives the first acknowledgment message indicating that the broadcast message is successfully received, if there is no new data to be broadcast, the second terminal device stops sending the broadcast message, powers off the transceiver, and enters the deep sleep state, so as to reduce power consumption of the second terminal device.

In a possible design, the broadcast message includes first indication information, and the first indication information is used to indicate whether the broadcast message includes the first data.

In a possible design, the first indication information is at least one of a PDU type field, an advertising data type field, an advertising data field, an advertising data information field, and a universally unique identifier that are of an advertising PDU.

In a possible design, when the first terminal device sends the broadcast message on the broadcast channel in a Bluetooth low energy manner, the broadcast message is the advertising protocol data unit PDU, and the first acknowledgment message is a scanning request PDU, or the first acknowledgment message is an acknowledgment PDU.

In a possible design, the second terminal device includes a wake-up period and a deep sleep period. The wake-up period includes a plurality of events, each event includes a sending time period and a listening time period, and the second terminal device is in the deep sleep state within a time interval between two adjacent events. The second terminal device is in the deep sleep state in the deep sleep period, and both the transceiver and the preset communications module of the second terminal device are powered off in the deep sleep period.

It should be noted that, in this application, the second terminal device uses a discontinuous sending/ receiving manner to transmit data, so that power consumption of the second terminal device can be reduced.

In a possible design, the receiving, by the second terminal device, a first acknowledgment message on the broadcast channel includes:
receiving, by an air interface layer of the second terminal device, the first acknowledgment message on the broadcast channel; the determining, by the second terminal device when receiving the first acknowledgment message, whether there is new broadcast data to be sent includes: reporting, by the air interface layer, acknowledgment information in the first acknowledgment message to an upper layer of the second terminal device when receiving the first acknowledgment message; and determining, by the upper layer when receiving the acknowledgment information, whether there is new broadcast data to be sent; the sending, by the second terminal device, a new broadcast message when determining that there is new broadcast data to be sent includes: sending, by the upper layer, the new broadcast data to the air interface layer when determining that there is new broadcast data to be sent; and sending, by the air interface layer, the new broadcast message, where the new broadcast message carries the new broadcast data; the stopping, by the second terminal device when determining that there is no new broadcast data to be sent, sending the broadcast message includes: sending, by the upper layer, third indication information to the air interface layer when determining that there is no new broadcast data to be sent, where the third indication information is used to instruct the air interface layer to stop broadcasting; and after receiving the third indication information, stopping, by the air interface layer according to the third indication information, sending the broadcast message.

In a possible design, the second acknowledgment message further includes an identifier of the first terminal device.

According to a third aspect, this application provides a first terminal device, and the device includes: a transceiver, configured to receive, on a broadcast channel, a broadcast message sent by a second terminal device, and send a first acknowledgment message to the second terminal device on the broadcast channel, where the first acknowledgment message is a response message indicating that the first terminal device successfully receives the broadcast message; a processor, configured to: when determining that the broadcast message carries first data, obtain the first data carried in the broadcast message; and the transceiver, further configured to report the first data to a corresponding application server.

In a possible design, the broadcast message includes first indication information, and the first indication information is used to indicate whether the broadcast message carries the first data.

In a possible design, when the first terminal device receives the broadcast message on the broadcast channel in a Bluetooth low energy manner, the broadcast message is an advertising protocol data unit PDU, and the first acknowledgment message is a scanning request PDU, or the first acknowledgment message is an acknowledgment PDU.

In a possible design, the first indication information is at least one of a PDU type field, an advertising data type field, an advertising data field, an advertising data information field, and a universally unique identifier that are of the advertising PDU.

In a possible design, when receiving, on the broadcast channel, the broadcast message sent by the second terminal device, the transceiver is specifically configured to: receive, on a broadcast channel of an air interface layer, the broadcast message sent by the second terminal device.

In a possible design, the transceiver sends the first acknowledgment message to the second terminal device on the broadcast channel comprises: the air interface layer sends the first acknowledgment message to the second terminal device on the broadcast channel after receiving the broadcast message.

In a possible design, the transceiver sends the first acknowledgment message to the second terminal device on the broadcast channel comprises: the air interface layer sends broadcast data in the broadcast message to an upper layer of the first terminal device; the upper layer sends second indication information to the air interface layer after receiving the broadcast data, where the second indication information is used to instruct the air interface layer to send the first acknowledgment message; and the air interface layer sends the first acknowledgment message on the broadcast channel after receiving the second indication information.

In a possible design, when reporting the first data to the corresponding application server, the transceiver is specifically configured to: report the first data to the corresponding application server when receiving, on the broadcast channel, a second acknowledgment message sent by the second terminal device, where the second acknowledgment message is a response message indicating that the second terminal device successfully receives the first acknowledgment message.

In a possible design, the processor is further configured to: when receiving, on the broadcast channel, the second acknowledgment message sent by the second terminal device, determine whether the second acknowledgment message carries an identifier of the first terminal device. That the transceiver reports the first data to the corresponding application server when receiving, on the broadcast channel, the second acknowledgment message sent by the second terminal device includes: the processor controls the transceiver to report the first data to the corresponding application when determining that the second acknowledgment message carries the identifier of the first terminal device.

In a possible design, when determining that the broadcast message carries the first data and obtaining the first data carried in the broadcast message, the processor is specifically configured to: the air interface layer sends the broadcast data in the broadcast message to the upper layer of the first terminal device; and the upper layer obtains the first data when determining that the broadcast data includes the first data. That the transceiver sends the first acknowledgment message to the second terminal device on the broadcast channel includes:
the upper layer of the first terminal device sends second indication information to the air interface layer after the transceiver reports the first data to the application server, where the second indication information is used to instruct the air interface layer to send the first acknowledgment message; and
the air interface layer sends the first acknowledgment message to the second terminal device on the broadcast channel after receiving the second indication information.

In this application, for a specific description and beneficial effects of transmitting data by the first terminal device, refer to the description of the first aspect. Details are not described herein again.

According to a fourth aspect, this application provides a second terminal device, and the device includes: a processor, configured to determine a broadcast message, where the broadcast message carries first data, and the first data is to be reported by the second terminal device to an application server; and a transceiver, configured to send the broadcast message to a first terminal device on a broadcast channel, and receive a first acknowledgment message on the broadcast channel, where the first acknowledgment message is a response message indicating that the first terminal device successfully receives the broadcast message.

In a possible design, the transceiver is further configured to: send a second acknowledgment message to the first terminal device on the broadcast channel after receiving the first acknowledgment message, where the second acknowledgment message is a response message indicating that the second terminal device successfully receives the first acknowledgment message.

In a possible design, the processor is further configured to: determine, when the transceiver receives the first acknowledgment message, whether there is new broadcast data to be sent; send a new broadcast message when determining that there is new broadcast data to be sent, where the new broadcast message carries the new broadcast data; and stop sending the broadcast message when determining that there is no new broadcast data to be sent.

In a possible design, when determining that there is no new broadcast data to be sent and stopping sending the broadcast message, the processor is specifically configured to: when determining that there is no new broadcast data to be sent, stop sending the broadcast message, and power off a transceiver; or when determining that there is no new broadcast data to be sent, stop sending the broadcast message, and enter a deep sleep state, where both a transceiver and a preset communications module of the second terminal device are powered off in the deep sleep state.

In a possible design, the broadcast message includes first indication information, and the first indication information is used to indicate whether the broadcast message includes the first data.

In a possible design, the first indication information is at least one of a PDU type field, an advertising data type field, an advertising data field, an advertising data information field, and a universally unique identifier that are of the advertising PDU.

In a possible design, when the first terminal device sends the broadcast message on the broadcast channel in a Bluetooth low energy manner, the broadcast message is the advertising protocol data unit PDU, and the first acknowledgment message is a scanning request PDU, or the first acknowledgment message is an acknowledgment PDU.

In a possible design, the second terminal device includes a wake-up period and a deep sleep period. The wake-up period includes a plurality of events, each event includes a sending time period and a listening time period, and the second terminal device is in the deep sleep state within a time interval between two adjacent events. The second terminal device is in the deep sleep state in the deep sleep period, and both the transceiver and the preset communications module of the second terminal device are powered off in the deep sleep period.

In a possible design, when receiving the first acknowledgment message on the broadcast channel, the transceiver is specifically configured to:
the air interface layer receives the first acknowledgment message on the broadcast channel.

When receiving the first acknowledgment message and determining whether there is new broadcast data to be sent, the processor is specifically configured to: the air interface layer reports acknowledgment information in the first acknowledgment message to an upper layer of the second terminal device when receiving the first acknowledgment message; and the upper layer determines, when receiving the acknowledgment information, whether there is new broadcast data to be sent. When determining that there is new broadcast data to be sent and sending a new broadcast message, the processor is specifically configured to: the upper layer sends the new broadcast data to the air interface layer when determining that there is new broadcast data to be sent; and the air interface layer sends the new broadcast message, where the new broadcast message carries the new broadcast data. When determining that there is no new broadcast data to be sent and stopping sending the broadcast message, the processor is specifically configured to: the upper layer sends third indication information to the air interface layer when determining that there is no new broadcast data to be sent, where the third indication information is used to instruct the air interface layer to stop broadcasting; and after receiving the third indication information, the air interface layer stops, according to the third indication information, sending the broadcast message.

In a possible design, the second acknowledgment message further includes an identifier of the first terminal device.

In this application, for a specific description and beneficial effects of transmitting data by the second terminal device, refer to the description of the first aspect. Details are not described herein again.

According to a fifth aspect, this application further provides a computer readable storage medium including an instruction. When the instruction is run on a computer, the computer is enabled to perform the method according to any one of the foregoing aspects.

According to a sixth aspect, this application further provides a chip. The chip includes an input interface, an output interface, at least one processor, and at least one memory. The at least one memory is configured to store code, and the at least one processor is configured to execute the code in the memory. When the code is executed, the processor implements the method described in any one of the foregoing aspects.

According to a seventh aspect, this application provides a computer program, and the computer program includes a computer instruction. When the computer instruction is executed on a computer, the computer is enabled to perform the method described in any one of the foregoing aspects.

According to an eighth aspect, this application provides a communications system, including the first terminal device provided in the first aspect and the second terminal device provided in the second aspect. It can be learned from the foregoing that, in this application, the second terminal device directly sends the broadcast message on the broadcast channel, and the first terminal device also directly sends the first acknowledgment message on the broadcast channel when receiving the broadcast message. In addition, when determining that the broadcast message carries the first data that is to be reported by the second terminal device, the first terminal device reports the first data to the corresponding application server. It can be learned that, in the method in this application, the first terminal device and the second terminal device can directly transmit data without a need to establish a connection, so that signaling overheads are reduced.

### BRIEF DESCRIPTION OF DRAWINGS

FIG. 1A and FIG. 1B are schematic diagrams of application scenarios according to this application;

FIG. 2 is another schematic diagram of an application scenario according to this application;

FIG. 3 shows an interaction process of a Bluetooth communications protocol;

FIG. 4 shows a procedure of a data transmission method according to this application;

FIG. 5 shows a procedure of a data transmission method according to this application;

FIG. 6a and FIG. 6b show procedures of a data transmission method according to this application;

FIG. 7a and FIG. 7b show procedures of a data transmission method according to this application;

FIG. 8 shows a procedure of a data transmission method according to this application;

FIG. 9 and FIG. 10 are schematic diagrams of discontinuous receiving/ sending;

FIG. 11 and FIG. 12 are schematic structural diagrams of terminal devices according to this application; and

FIG. 13 is a schematic structural diagram of a data transmission apparatus according to this application.

### DESCRIPTION OF EMBODIMENTS

For ease of understanding, a description of concepts related to this application is provided for reference by using an example, which is shown as follows:

A terminal device is user equipment (user equipment, UE), and may be a movable terminal device, or may be an unmovable terminal device. The device is mainly configured to receive or send service data. The user equipment may be distributed in a network, and the user equipment has different names in different networks, such as a terminal, a mobile station, a subscriber unit, a station, a cellular phone, a personal digital assistant, a wireless modem, a wireless communications device, a handheld device, a laptop computer, a cordless telephone set, a wireless local loop station, or a vehicle-mounted device. The user equipment may communicate with one or more core networks through a radio access network (radio access network, RAN) (an access part of a wireless communications network). For example, the user equipment exchanges a voice and/or data with the radio access network.

The wireless communications network provides a wireless communication function. The wireless communications network may use different communications technologies, such as code division multiple access (code division multiple access, CDMA for short), wideband code division multiple access (wideband code division multiple access, WCDMA for short), time division multiple access (time division multiple access, TDMA), frequency division multiple access (frequency division multiple access, FDMA for short), orthogonal frequency division multiple access (orthogonal frequency-division multiple access, OFDMA), single carrier frequency division multiple access (single Carrier FDMA, SC-FDMA), and carrier sense multiple access with collision avoidance (carrier sense multiple access with collision avoidance). Networks may be classified into a 2G (generation) network, a 3G network, a 4G network, or a future evolved network such as a 5G network based on factors such as capacities, rates, and delays that are of different networks. A typical 2G network includes a global system for mobile communications (global system for mobile communications/general packet radio service, GSM) network or a general packet radio service (general packet radio service, GPRS) network. A typical 3G network includes a universal mobile telecommunications system (universal mobile telecommunications system, UMTS) network. A typical 4G network includes a long term evolution (long term evolution, LTE) network. The UMTS network sometimes may also be referred to as a universal terrestrial radio access network (universal terrestrial radio access network, UTRAN), and the LTE network sometimes may also be referred to as an evolved universal terrestrial radio access network (evolved universal terrestrial radio access network, E-UTRAN). Based on different resource allocation manners, the networks may be classified into a cellular communications network and a wireless local area network (wireless local area networks, WLAN). The cellular communications network is based on scheduling, and the WLAN is based on contention. All the 2G, 3G, and 4G networks are cellular communications networks.

The following describes technical solutions in this application with reference to the accompanying drawings.

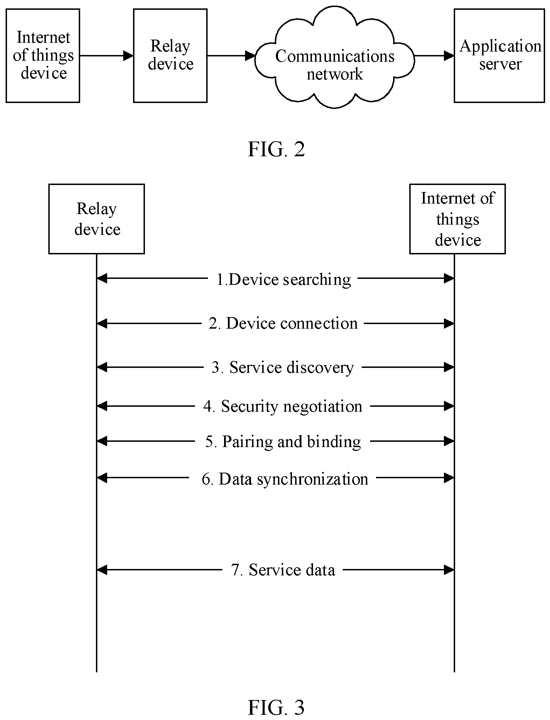

FIG. 2 is a schematic diagram of a possible system network according to this application. As shown in FIG. 2, an internet of things device may transmit, to a relay device, related data that needs to be reported, and then the relay device reports the related data to an application server through a communications network.

In this application, the internet of things device may include a network camera, an internet of vehicles device, a sensor, a wearable intelligent device (for example, a smartwatch), and the like. The communications network may be a wired communications network, or may be a wireless communications network. The wireless communications network may be specifically a second generation mobile communications network, a third generation mobile communications network, a fourth generation mobile communications network, even a future fifth generation mobile communications network, or the like. There may be specifically one or more application servers, and the application server may be specifically configured to store related data reported by the internet of things device. The relay device may be specifically a device that can provide a relay function, such as a smartphone or a portable computer.

In an example of this application, as shown in FIG. 1B, for example, the internet of things device in FIG. 2 is a shared bicycle, a sensor, and a watch; the relay device is a smartphone; the wireless communications network is a second generation cellular network; and the application server is a sensor server, a bicycle-sharing server, and a watch server, so as to describe the foregoing process in detail. In this application, the sensor, the shared bicycle, and the watch may separately transmit, to the smartphone, related data that needs to be reported. The smartphone may report, through a cellular network, the related data of the sensor to the sensor server, the related data of the shared bicycle to the bicycle-sharing server, and the related data of the watch to the watch server.

This application mainly focuses on a process of how an internet of things device transmits related data to a relay device. Usually, the internet of things device first needs to be connected to the relay device, then the internet of things device can transmit data to the relay device and the relay device can transmit data to the internet of things device only after a connection is established. As shown in FIG. 3, for example, the internet of things device transmits data to the relay device in a Bluetooth manner. First six steps need to be performed on the relay device and the internet of things device: 1. Device searching; 2. Device connection; 3. Service discovery; 4. Security negotiation; 5. Pairing and binding; and 6. Data synchronization. Then the internet of things device can transmit data to the relay device. In other words, a step "7. Service data" in FIG. 3 is performed.

In actual application, each time a data volume of data that needs to be reported by the internet of things device is relatively small. However, in a process in which the foregoing connection is establishing, a large quantity of signaling interactions are required, resulting in relatively high signaling overheads of the internet of things device and the relay device.

Based on the foregoing description, this application provides a data transmission method. A main principle of the method is as follows: An internet of things device directly transmits service data to a relay device on a broadcast channel without being connected to the relay device, so that signaling overheads of the internet of things device and the relay device are reduced.

It should be noted that "a plurality of" mentioned in this application means two or more. Terms such as "first" and "second" described in this application are used for differentiation only, and are not used to indicate or imply relative importance or a sequence.

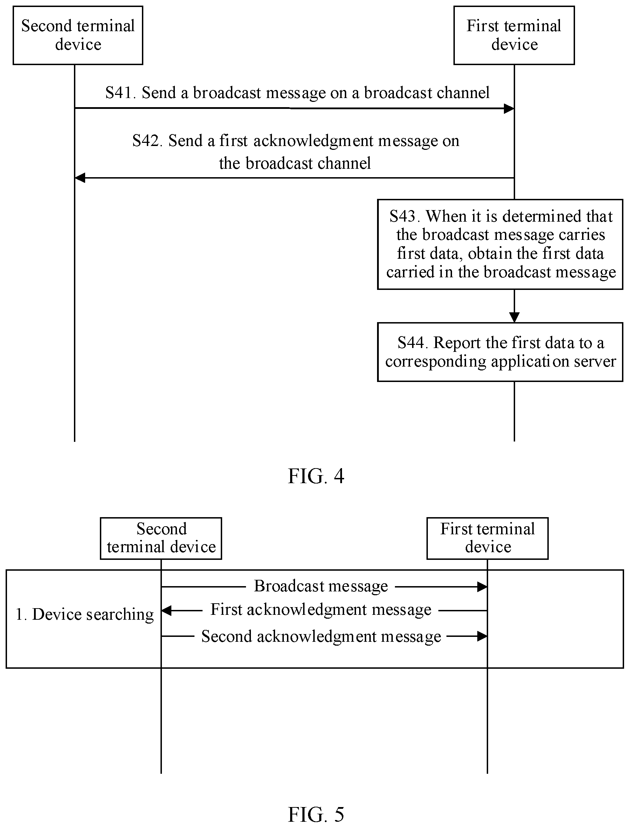

FIG. 4 shows a procedure of a data transmission method according to this application. A first terminal device in the procedure corresponds to the relay device in FIG. 2, and a second terminal device corresponds to the internet of things device in FIG. 2. As shown in FIG. 4, the data transmission method includes the following steps.

Step S41: The second terminal device sends a broadcast message to the first terminal device on a broadcast channel.

In this application, the broadcast message may include first indication information, the first indication information is used to indicate whether the broadcast message carries first data, and the first data is to be reported by the second terminal device to an application server.

Step S42: The first terminal device sends a first acknowledgment message to the second terminal device on the broadcast channel, where the first acknowledgment message is a response message indicating that the first terminal device successfully receives the broadcast message.

Step S43: When determining that the broadcast message carries the first data, the first terminal device obtains the first data carried in the broadcast message.

In this application, the broadcast message further includes a device identifier field and a broadcast message identifier field, the device identifier field is used to identify a device sending the broadcast message, and the broadcast message identifier field is used to identify different broadcast messages sent by a same device.

In this application, after receiving the first data, the first terminal device may first determine, based on the device identifier field and the broadcast message identifier field in the broadcast message, whether the broadcast message is initially received. Then, when determining that the broadcast message is initially received and that the broadcast message carries the first data, the first terminal device obtains the first data carried in the broadcast message. If determining that the broadcast message is not initially received, in other words, is repeatedly received, the first terminal device discards the received broadcast message.

Step S44: The first terminal device reports the first data to a corresponding application server.

It should be noted that, in this application, the broadcast message and the first acknowledgment message may be transmitted between the first terminal device and the second terminal device by using various wireless communications technologies such as Bluetooth low energy (Bluetooth low energy, BLE), WLAN, 5G D2D, and LTE D2D.

It should be further noted that a sequence of step S41 to step S44 is not limited in this application. For example, in this application, the method in this application may be performed based on a sequence of step S41, step S42, step S43, and step S44. Alternatively, the method in this application may be performed in a sequence of step S41, step S43, step S42, and step S44. Alternatively, the method in this application may be performed in a sequence of step S41, step S43, step S44, and step S42. Details are not described herein again.

It can be learned from the foregoing that, in this application, the second terminal device directly sends the broadcast message on the broadcast channel, and the first terminal device also directly sends the first acknowledgment message on the broadcast channel when receiving the broadcast message. In addition, when determining that the broadcast message carries the first data that is to be reported by the second terminal device, the first terminal device reports the first data to the corresponding application server. It can be learned that, in the method in this application, the first terminal device and the second terminal device can directly transmit data without a need to establish a connection, so that signaling overheads are reduced.

In the prior art, as shown in FIG. 3, when two devices transmit data in a Bluetooth low energy manner, a process is specifically as follows: 1. Device searching; 2. Device connection; 3. Service discovery; 4. Security negotiation; 5. Pairing and binding; 6. Data synchronization; and 7. Service data. It can be learned that the two devices may transmit service data only after signaling interactions in the foregoing six stages are first performed between the two devices.

As shown in FIG. 5, the method in this application may be specifically applied to a stage of "1. Device searching". In the stage, a second terminal device sends a broadcast message to a first terminal device, and the broadcast message includes first data that is to be reported by the second terminal device. Specifically, the broadcast message may be an advertising protocol data unit Advertising PDU defined in a BLE protocol, such as an ADV_IND, an ADV_NONCONN_IND, an ADV_EXT_IND, or an AUX_ADV_IND. The first terminal device sends a first acknowledgment message to the second terminal device. Specifically, the first acknowledgment message may be a scanning request PDU defined in the BLE protocol, such as a SCAN_REQ, or an AUX_SCAN_REQ. Alternatively, the first acknowledgment message may be specifically an acknowledgment PDU, and the acknowledgment PDU may be a BLE packet dedicated to acknowledging that the advertising PDU is successfully received.

It should be noted that, in the example shown in FIG. 5, the second terminal device may further send a second acknowledgment message to the first terminal device. Specifically, the second acknowledgment message may be a scanning response PDU defined in the BLE protocol, for example, a SCAN RSP or an AUX_SCAN_RSP. For a detailed description of the second acknowledgment message, refer to the description in the following embodiment.

In this application, the broadcast message shown in FIG. 5 further carries first indication information, and the first indication information is used to indicate whether the broadcast message carries the first data. The first indication information may be specifically at least one of a PDU type field, an advertising data type AD Type field, an advertising data AD Data field, an advertising data information ADI field, and a universally unique identifier UUID that are of the advertising PDU.

In this application, the broadcast message in FIG. 5 further includes a device identifier field and a broadcast message identifier field. The device identifier field and the broadcast message identifier field are used by the first terminal device to determine whether the broadcast message is initially received. In this application, a content carried in the device identifier field may be a device address, and a content carried in the broadcast message identifier field may be at least one of a sequence number (sequence number, SN), an advertising data ID (advertising data ID, DID), an advertising set ID (advertising set ID, SID), and the like.

It can be learned that, in the method in this application, service data may be directly transmitted in a first device searching stage. Compared with the prior art in which signaling interactions in six stages need to be first performed, and then the service data is transmitted in a seventh stage, signaling overheads can be reduced.

In this application, regardless of which manner is used for communication between the first terminal device and the second terminal device, a communications protocol stack between the first terminal device and the second terminal device may be divided into an air interface layer and an upper layer, and the upper layer may also be referred to as a Higher layer. In this application, an interaction process between the air interface layer and the upper layer is used as an example to describe a process of this application in detail.

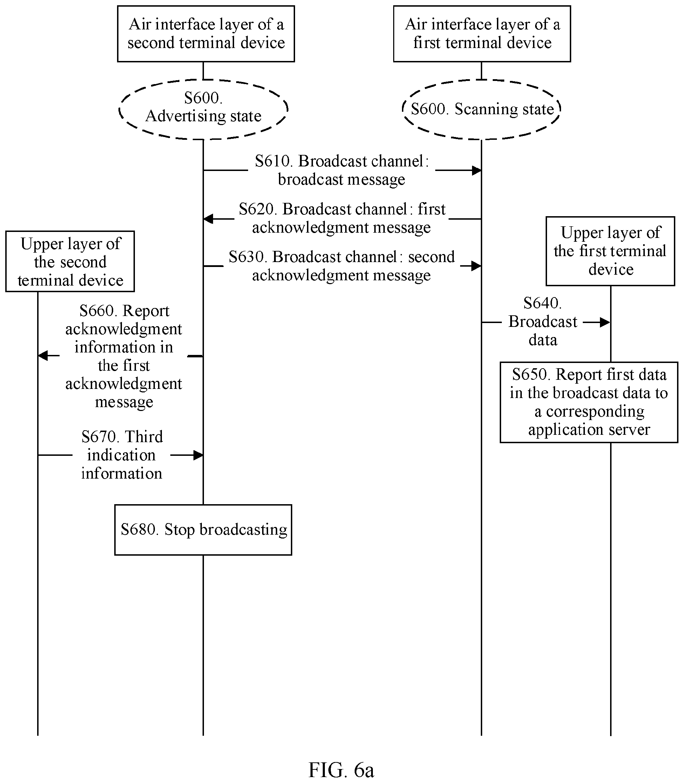

FIG. 6a shows a procedure of a data transmission method according to this application. A first terminal device in the procedure may correspond to the relay device in FIG. 2, and a second terminal device may correspond to the internet of things device in FIG. 2. As shown in FIG. 6a, the method provided in this application is as follows:

Step S600: An air interface layer of the second terminal device enters an advertising state (advertising status), and an air interface layer of the first terminal device enters a scanning state (scanning status).

Step S610: The air interface layer of the second terminal device sends a broadcast message on a broadcast channel.

In this application, the broadcast message carries first data that is to be reported by the second terminal device to an application server.

Step S620: The air interface layer of the first terminal device sends a first acknowledgment message to the second terminal device on the broadcast channel after receiving the broadcast message, where the first acknowledgment message is a response message indicating that the broadcast message is successfully received.

In this application, the first acknowledgment message may be a scanning request PDU (such as a SCAN_RSP or an AUX_SCAN_RSP) or an acknowledgment PDU.

Step S630: The air interface layer of the second terminal device sends a second acknowledgment message to the first terminal device on the broadcast channel after receiving the first acknowledgment message, where the second acknowledgment message is a response message indicating that the first acknowledgment message is successfully received.

In this application, the second acknowledgment message may be a scanning response PDU such as a SCAN_RSP or an AUX_SCAN_RSP.

Step S640: The air interface layer of the first terminal device sends broadcast data in the broadcast message to an upper layer of the first terminal device.

In this application, the broadcast message may further carry one or more of a terminal device address, a sequence number SN, an advertising data ID, an advertising set ID, and the like. In this application, the air interface layer of the first terminal device may determine, based on one or more of the terminal device address, the sequence number SN, the advertising data ID, the advertising set ID, and the like that are carried in the broadcast message, whether the broadcast message is repeatedly received. If the broadcast message is repeatedly received, the air interface layer of the first terminal device discards the received broadcast message; and if the broadcast message is not repeatedly received, the air interface layer of the first terminal device sends the broadcast data in the broadcast message to the upper layer of the first terminal device.

In this application, because the second terminal device sends the broadcast message on the broadcast channel in a broadcast manner, a plurality of first terminal devices may receive the broadcast message. Correspondingly, in this application, the plurality of first terminal devices may respond to the broadcast message with first acknowledgment messages. In this application, the second terminal device may respond, with the second acknowledgment message, to a first acknowledgment message received initially, and the first terminal device may report the first data to a corresponding server after receiving the second acknowledgment message. In this way, repeated reporting of same first data multiple times can be avoided, so that power consumption of the first terminal device is reduced.

In this application, more specifically, the second acknowledgment message may further include an identifier of the first terminal device. When receiving, on the broadcast channel, the second acknowledgment message sent by the second terminal device, the first terminal device determines whether the second acknowledgment message carries the identifier of the first terminal device. The first terminal device reports the first data to a corresponding application server when determining that the second acknowledgment message carries the identifier of the first terminal device.

In actual application, because the second terminal device sends the second acknowledgment message on the broadcast channel, all the plurality of first terminal devices may receive the second acknowledgment message. To prevent the plurality of first terminal devices from repeatedly reporting the first data, in this application, when responding to the second acknowledgment message, the first terminal device may carry the correspondingly received identifier of the first terminal device, so as to avoid repeatedly reporting the first data. Therefore, power consumption of the first terminal device is reduced.

Step S650: The upper layer of the first terminal device reports the first data to the corresponding application server when the broadcast data includes the first data.

Step S660: The air interface layer of the second terminal device reports acknowledgment information in the first acknowledgment message to an upper layer of the second terminal device.

Step S670: The upper layer of the second terminal device determines whether there is new broadcast data to be sent. If no new broadcast data to be sent, send third indication information to the air interface layer of the second terminal device, so that the air interface layer of the second terminal device stops broadcasting.

Certainly, in this application, if determining that there is new broadcast data to be sent, the upper layer of the second terminal indicates the new broadcast data to an air interface, and the air interface continues to broadcast a new broadcast message. It should be noted that, in this application, one or more of a sequence number SN, an advertising data DID, an advertising set SID, and the like in the new broadcast message need to be updated, and the new broadcast message carries the new broadcast data.

Step S680: After receiving the third indication information, the air interface layer of the second terminal device stops broadcasting.

In this application, when determining that there is no new broadcast data to be sent, the second terminal device may stop sending the broadcast message, and power off a transceiver.

Alternatively, when determining that there is no new broadcast data to be sent, the second terminal device may stop sending the broadcast message, and enter a deep sleep state. Both the transceiver and a preset communications module of the second terminal device are powered off in the deep sleep state.

In the prior art, before two terminal devices are connected to each other, during communication on a broadcast channel, the two devices usually search for each other, synchronize, or obtain information used to establish a connection, and do not acknowledge whether information is successfully received on the broadcast channel. However, in the method in this application, the acknowledgment information is transmitted on the broadcast channel, so that it is possible to transmit service data on the broadcast channel. In addition, based on the acknowledgment information, the second terminal device can successfully obtain whether broadcast information is successfully received, so that it is possible to send next piece of new broadcast information.

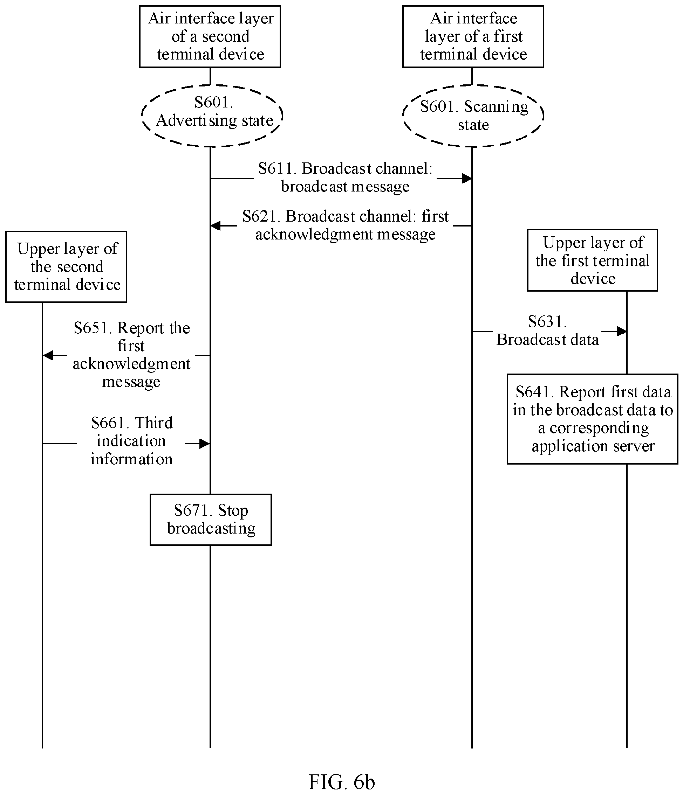

FIG. 6b shows a procedure of a data transmission method according to this application. A first terminal device in the procedure may correspond to the relay device in FIG. 2, and a second terminal device may correspond to the internet of things device in FIG. 2. As shown in FIG. 6b, the method provided in this application is as follows:

Step S601: An air interface layer of the second terminal device enters an advertising state (Advertising status), and an air interface layer of the first terminal device enters a scanning state (Scanning status).

Step S611: The air interface layer of the second terminal device sends a broadcast message on a broadcast channel.

Step S621: The air interface layer of the first terminal device sends a first acknowledgment message to the second terminal device on the broadcast channel after receiving the broadcast message.

Step S631: The air interface layer of the first terminal device sends broadcast data in the broadcast message to an upper layer of the first terminal device.

Step S641: The upper layer of the first terminal device reports first data to a corresponding application server when determining that the broadcast data includes the first data.

Step S651: The air interface layer of the second terminal device reports the first acknowledgment message to an upper layer of the second terminal device.

Step S661: The upper layer of the second terminal device sends third indication information to the air interface layer of the second terminal device when determining that there is no new data to be broadcast.

Step S671: After receiving the third indication information, the air interface layer of the second terminal device stops broadcasting.

In this application, a difference between the embodiment shown in FIG. 6b and the embodiment shown in FIG. 6a lies in that the second terminal device no longer sends a second acknowledgment message to the first terminal device. In this application, for specific descriptions of the embodiment shown in FIG. 6b, refer to the procedure shown in FIG. 6a. Details are not described herein again.

In this application, because the second terminal device no longer sends the second acknowledgment message to the first terminal device, signaling overheads can be further reduced.

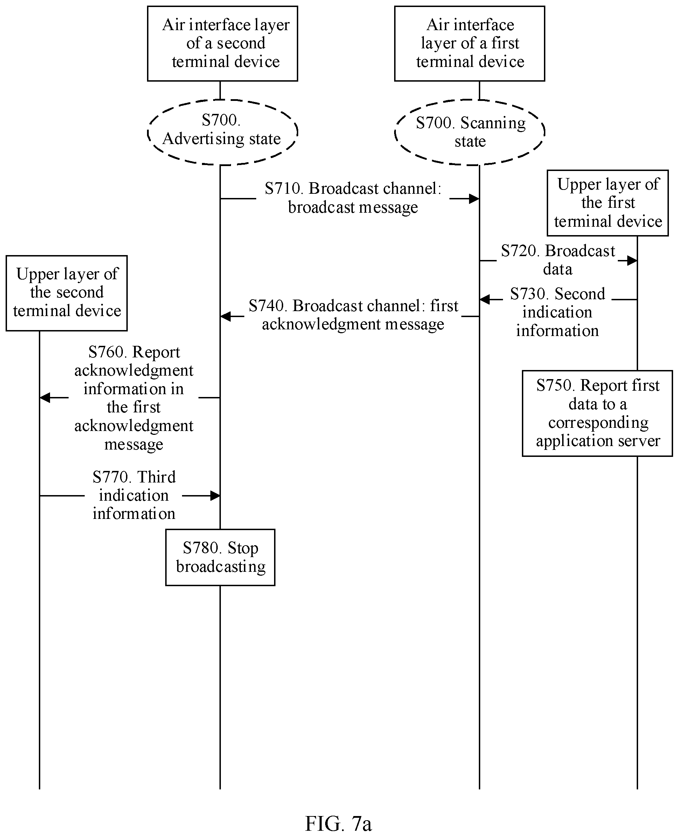

FIG. 7a shows a procedure of a data transmission method according to this application. A first terminal device in the procedure may correspond to the relay device in FIG. 2, and a second terminal device may correspond to the internet of things device in FIG. 2. As shown in FIG. 7a, the method provided in this application is as follows:

Step S700: An air interface layer of the second terminal device enters an advertising state (Advertising status), and an air interface layer of the first terminal device enters a scanning state (Scanning status).

Step S710: The air interface layer of the second terminal device sends a broadcast message on a broadcast channel.

Step S720: The air interface layer of the first terminal device sends broadcast data in the broadcast message to an upper layer of the first terminal device after receiving the broadcast message.

Step S730: The upper layer of the first terminal device sends second indication information to the air interface layer after receiving the broadcast data, where the second indication information is used to instruct the air interface layer to send the first acknowledgment information.

Step S740: The air interface layer of the first terminal device sends the first acknowledgment message on the broadcast channel after receiving the second indication information.

Step S750: The first terminal device reports first data to a corresponding application server when determining that the broadcast data includes the first data.

Step S760: The air interface layer of the second terminal device reports acknowledgment information in the first acknowledgment message to an upper layer of the second terminal device.

Step S770: The upper layer of the second terminal device sends third indication information to the air interface layer of the second terminal device when determining that there is no new data to be broadcast.

It should be understood that, if determining that there is new broadcast data to be sent, the upper layer of the second terminal indicates the new broadcast data to an air interface, and the air interface continues to broadcast a new broadcast message.

Step S780: After receiving the third indication information, the air interface layer of the second terminal device stops broadcasting.

In this application, after receiving the broadcast message, the air interface layer of the first terminal device sends the broadcast data in the broadcast message to the upper layer, and then the upper layer determines whether to send the first acknowledgment message.

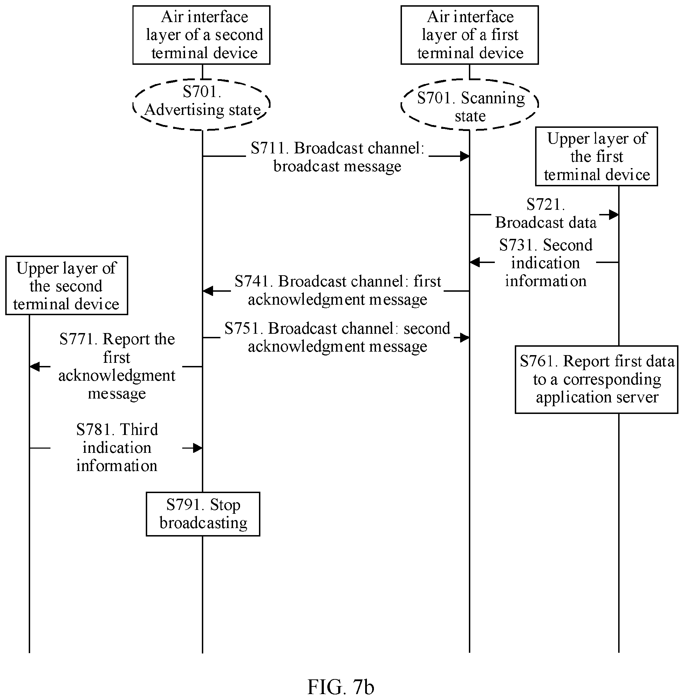

FIG. 7b shows a procedure of a data transmission method according to this application. A first terminal device in the procedure may correspond to the relay device in FIG. 2, and a second terminal device may correspond to the internet of things device in FIG. 2. As shown in FIG. 7b, the method provided in this application is as follows:

Step S701: An air interface layer of the second terminal device enters an advertising state (Advertising status), and an air interface layer of the first terminal device enters a scanning state (Scanning status).

Step S711: The air interface layer of the second terminal device sends a broadcast message on a broadcast channel.

Step S721: The air interface layer of the first terminal device sends broadcast data in the broadcast message to an upper layer of the first terminal device.

Step S731: The upper layer of the first terminal device sends second indication to the air interface layer of the first terminal device.

Step S741: The air interface layer of the first terminal device sends a first acknowledgment message on the broadcast channel after receiving the second indication.

Step S751: The air interface layer of the second terminal device sends a second acknowledgment message on the broadcast channel after receiving the first acknowledgment message.

Step S761: The air interface layer of the first terminal device sends second acknowledgment data in the second acknowledgment message to the upper layer of the first terminal device, and the upper layer of the first terminal device reports first data in the broadcast data to a corresponding application server when receiving the second acknowledgment data.

Step S771: The air interface layer of the second terminal device reports the first acknowledgment message to an upper layer of the second terminal device.

Step S781: The upper layer of the second terminal device sends third indication information to the air interface layer of the second terminal device when determining that there is no new data to be broadcast.

It should be understood that, if determining that there is new broadcast data to be sent, the upper layer of the second terminal indicates the new broadcast data to an air interface, and the air interface continues to broadcast a new broadcast message.

Step S791: After receiving the third indication information, the air interface layer of the second terminal device stops broadcasting.

In this application, because the second terminal device sends the broadcast message in a broadcast manner, the second terminal device may receive a plurality of first acknowledgment messages. In this application, the second terminal device may send the second acknowledgment message for a first acknowledgment message received initially, and the first terminal device may report the first data when receiving the second acknowledgment message, so that repeated reporting of the first data can be avoided.

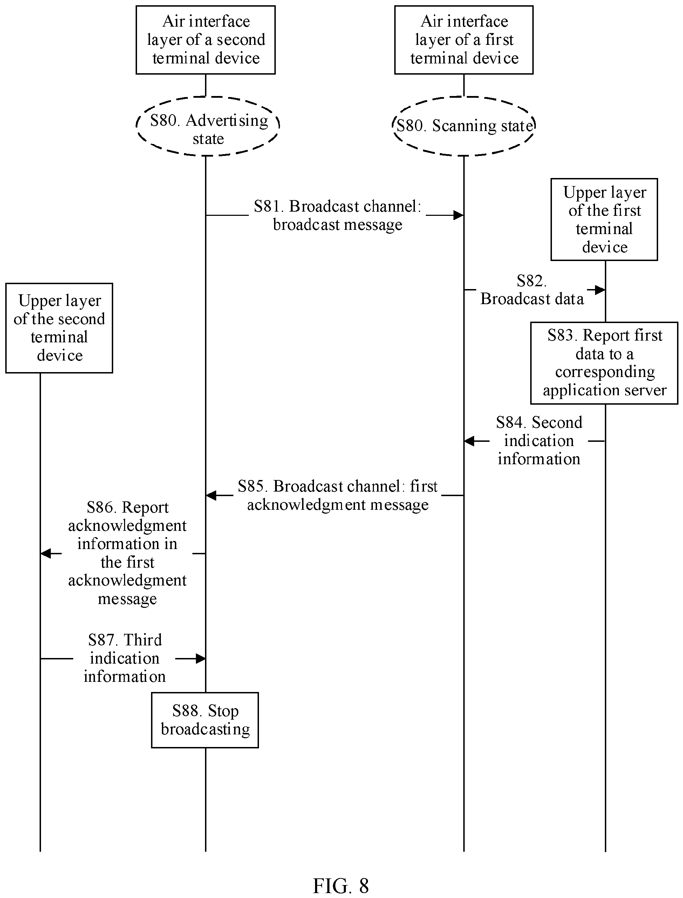

FIG. 8 shows a procedure of a data transmission method according to this application. A first terminal device in the procedure may correspond to the relay device in FIG. 2, and a second terminal device may correspond to the internet of things device in FIG. 2. As shown in FIG. 8, the method provided in this application is as follows:

Step S80: An air interface layer of the second terminal device enters an advertising state (Advertising status), and an air interface layer of the first terminal device enters a scanning state (Scanning status).

Step S81: The air interface layer of the second terminal device sends a broadcast message on a broadcast channel.

Step S82: The air interface layer of the first terminal device receives the broadcast message on the broadcast channel, and sends broadcast data in the broadcast message to an upper layer of the first terminal device.

Step S83: When determining that the broadcast data includes the first data, the upper layer of the first terminal device obtains the first data, and reports the first data to a corresponding application server.

Step S84: The upper layer of the first terminal device sends second indication information to the air interface layer of the first terminal device.

Step S85: The air interface layer of the first terminal device sends a first acknowledgment message to the second terminal device on the broadcast channel after receiving the second indication information.

Step S86: The air interface layer of the second terminal device reports acknowledgment information in the first acknowledgment message to an upper layer of the second terminal device after receiving the first acknowledgment message.

It should be noted that, in this application, after receiving the first acknowledgment message, the air interface layer of the second terminal may also send a second acknowledgment message to the first terminal device. A specific execution process is similar to that in FIG. 6a or FIG. 7b, and details are not described herein again.

Step S87: The upper layer of the second terminal device sends third indication information to the air interface layer of the second terminal device when determining that there is no new data to be broadcast.

It should be understood that, if determining that there is new broadcast data to be sent, the upper layer of the second terminal indicates the new broadcast data to an air interface, and the air interface continues to broadcast a new broadcast message.

Step S88: After receiving the third indication information, the air interface layer of the second terminal device stops broadcasting.

It can be learned from the foregoing that, in this application, only after successfully reporting the first data, the first terminal device responds to the second terminal device with the first acknowledgment message. In the method in this application, the second terminal device may accurately learn whether the first data in the broadcast message is successfully reported to the application server.

It should be noted that, in this application, when the first terminal device and the second terminal device transmit data to in a Bluetooth low energy manner, the air interface layer may be a link LL (link layer) layer or a physical layer in a Bluetooth communications protocol stack. The upper layer may be a host controller interface (host controller interface, HCI) layer, a host (Host) layer, an application layer, a profile (Profile) protocol layer, or the like, or may even be another communications protocol layer that uses Bluetooth as an underlying technology, such as a non-access stratum (non access stratum, NAS) of an LTE technology or a 5G technology, an application layer, or an adaptation layer that adapts to a Bluetooth communications protocol.

It should be further noted that the host layer may include one or more of the following protocol layers, which are specifically: a logical link control and adaptation protocol (logical link control and adaption protocol, L2CAP) layer, an attribute protocol (attribute protocol, ATT) layer, a security manager protocol (security manager protocol, SMP) layer, a generic attribute profile (generic attribute profile, GATT) layer, a generic access profile (generic access profile, GAP) layer, and the like.

It should be noted that, in this application, when the first terminal device and the second terminal device transmit data in the Bluetooth low energy manner, the broadcast data in the broadcast message may be an advertising data Advertising data, that is, an AdvData field in a valid payload Payload of an advertising protocol data unit Advertising PDU (for example, an ADV_IND, an ADV_NONCONN_IND, an ADV_EXT_IND, or an AUX_ADV_IND). The acknowledgment information in the first acknowledgment message may be a device address of the second terminal device, that is, a Scan A field in a valid payload Payload of a scanning request PDU (for example, a SCAN_RSP, or an AUX_SCAN RSP).

It should be noted that, in this application, the first data is a part of the broadcast data. The first data may be internet of things data collected by the second terminal device, such as location information, temperature, humidity, and air quality.

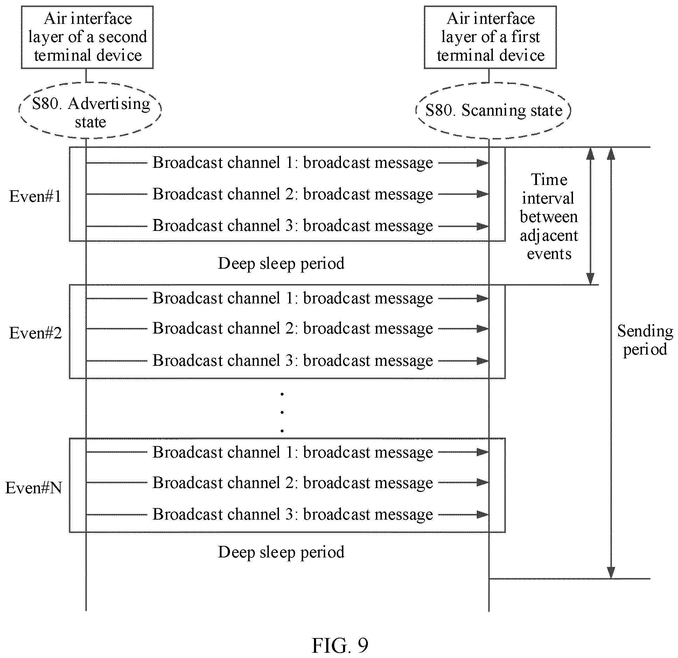

In this application, as shown in FIG. 9, a schematic diagram of a sending period is provided. In the schematic diagram shown in FIG. 9, a first terminal device corresponds to the relay device in FIG. 2, and a second terminal device corresponds to the internet of things device in FIG. 2.

Specifically, as shown in FIG. 9, a sending period of the second terminal device may be divided into different sending periods. Each sending period is divided into a wake-up period and a deep sleep period. The wake-up period includes a plurality of events, and each event includes a sending time period and a listening time period. In addition, within a time interval between two adjacent events, the second terminal device is in the deep sleep period.

In the deep sleep period, the second terminal device is in a deep sleep state, and both a transceiver and a preset communications module of the second terminal device are powered off in the deep sleep state.

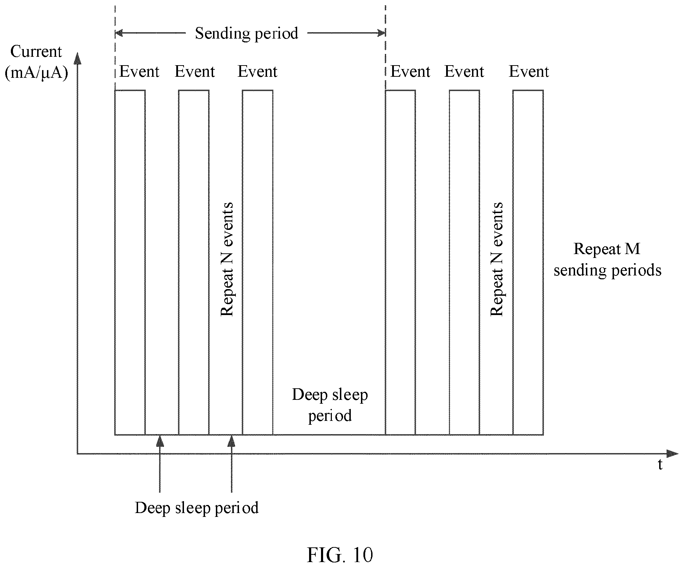

In this application, one sending period includes a wake-up period and a deep sleep period. It is assumed that each wake-up period includes N events, and the second terminal device is in the deep sleep period deep sleep within a time interval between two adjacent events. A schematic diagram of the sending period of the second terminal device is shown in FIG. 10.

It should be noted that, in this application, in the procedures shown in FIG. 6a, FIG. 6b, FIG. 7a, FIG. 7b, and FIG. 8, that the second terminal device sends the broadcast message to the first terminal device on the broadcast channel may be specifically: The second terminal device sends the broadcast message to the first terminal device on the broadcast channel in a sending time period of each event.

That the second terminal device receives the first acknowledgment message on the broadcast channel may be specifically: The second terminal device listens to the first acknowledgment message on the broadcast channel in a listening time period of each event, and receives the first acknowledgment message in the listening time period when listening and detecting the first acknowledgment message.

In this application, the second terminal device uses a discontinuous data sending/receiving manner shown in FIG. 9 or FIG. 10, so that power consumption of the second terminal device can be reduced.

It should be noted that in this application, parameters such as an advertising event interval (advertising event interval) and duration of the deep sleep period may be set. The parameters may be set by the upper layer of the second terminal device, or may be notified by a network device to the second terminal device by using the first terminal.

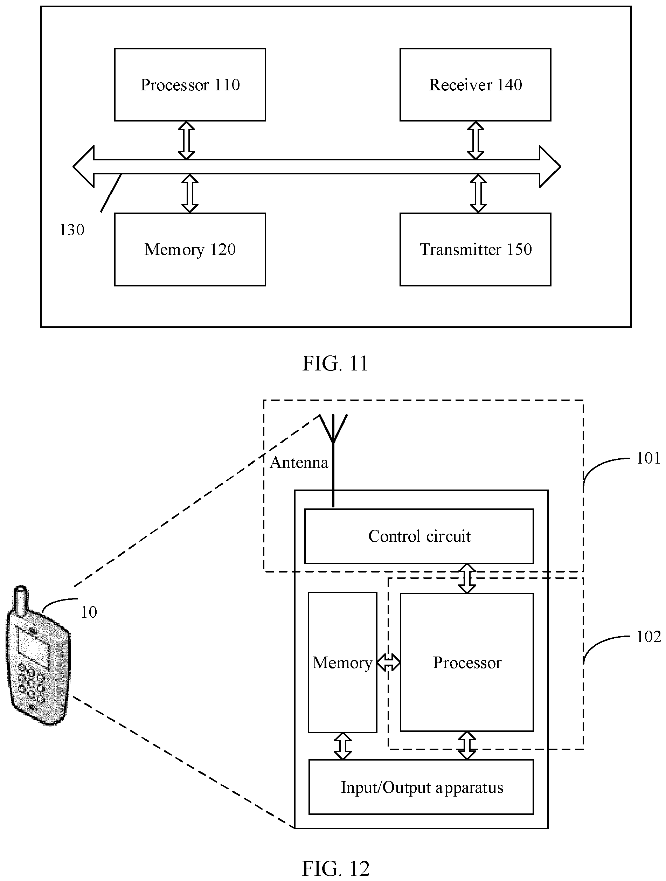

According to the foregoing method, as shown in FIG. 11, this application provides a terminal device 100. The terminal device 100 may be one of relay devices and internet of things devices in FIG. 1 to FIG. 3, or may be one of first terminal devices and second terminal devices in FIG. 4 to FIG. 9.

The terminal device 100 may include a processor 110 and a memory 120. Further, the device may further include a receiver 140 and a transmitter 150. Further, the device may further include a bus system 130. The processor 110, the memory 120, a receiver 140, and a transmitter 150 may be connected to each other by using the bus system 130.

The memory 120 is configured to store an instruction, and the processor 110 is configured to execute the instruction stored in the memory 120, to control the receiver 140 to receive a signal and control the transmitter 150 to send a signal, so as to complete the steps of the terminal device in the foregoing method. The receiver 140 and the transmitter 150 may be a same physical entity or different physical entities. When being the same physical entity, the receiver 140 and the transmitter 150 may be collectively referred to as a transceiver. The memory 120 may be integrated into the processor 110, or may be separate from the processor 110.

In an implementation, it may be considered that functions of the receiver 140 and the transmitter 150 are implemented by using a transceiver circuit or a dedicated transceiver chip. The processor 110 may be implemented by using a dedicated processing chip, processing circuit, or processor, or a general-purpose chip.

In another implementation, it may be considered that the wireless device provided in this embodiment of the present invention is implemented by using a computer. To be specific, program code for implementing functions of the processor 110, the receiver 140, and the transmitter 150 are stored in the memory, and a general purpose processor implements the functions of the processor 110, the receiver 140, and the transmitter 150 by executing the code in the memory.

For concepts, explanations, detailed descriptions, and other steps related to the technical solutions provided in this embodiment of this application and related to the device, refer to related descriptions in the foregoing method or another embodiment. Details are not described herein again.

FIG. 12 provides a schematic structural diagram of a terminal device. The terminal device may be one of relay devices and internet of things devices in FIG. 1 to FIG. 3, or may be one of first terminal devices and second terminal devices in FIG. 4 to FIG. 9. For ease of description, FIG. 12 shows only main components of the terminal device. As shown in FIG. 12, the terminal device includes a processor, a memory, a control circuit, an antenna, and an input/output apparatus. The processor is mainly configured to process a communications protocol and communication data, control the entire terminal device, execute a software program, and process data of the software program, for example, configured to support the first terminal device and the second terminal device to execute an action described in FIG. 4. The memory is mainly configured to store a software program and data, for example, store a codebook described in the foregoing embodiment. The control circuit is mainly configured to perform conversion between a baseband signal and a radio frequency signal, and process the radio frequency signal. A combination of the control circuit and the antenna may also be referred to as a transceiver that is mainly configured to receive and send a radio frequency signal in an electromagnetic wave form. The input/output apparatus such as a touchscreen, a display, or a keyboard is mainly configured to receive data entered by a user, and output data to the user.

After the terminal device is powered on, the processor may read a software program in a storage unit, explain and execute an instruction of the software program, and process data of the software program. When data needs to be sent wirelessly, the processor performs baseband processing on to-be-sent data, and outputs a baseband signal to a radio frequency circuit. After performing radio frequency processing on the baseband signal, the radio frequency circuit sends a radio frequency signal outward in an electromagnetic wave form by using the antenna. When data is sent to the terminal device, the radio frequency circuit receives the radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 12 shows only one memory and one processor. In actual user equipment, there may be a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communications protocol and the communication data. The central processing unit is mainly configured to control the entire user equipment, execute the software program, and process the data of the software program. The processor in FIG. 12 integrates functions of the baseband processor and the central processing unit. A person skilled in the art may understand that the baseband processor and the central processing unit may be individually separate processors, and are interconnected by using a technology, for example, a bus. A person skilled in the art may understand that the user equipment may include a plurality of baseband processors to adapt to different network standards, the user equipment may include a plurality of central processing units to enhance a processing capability of the user equipment, and components of the user equipment may be connected by using various buses. The baseband processor may also be expressed as a baseband processing circuit or a baseband processing chip. The central processing unit may also be expressed as a central processing circuit or a central processing chip. A function of processing the communications protocol and the communication data may be built in the processor, or may be stored in the storage unit in a form of a software program. The processor executes the software program to implement a baseband processing function.

For example, in this embodiment of the present invention, the antenna with a receiving/sending function and the control circuit may be considered as a transceiver unit 101 of UE 10, and the processor with a processing function is considered as a processing unit 102 of the UE 10. As shown in FIG. 4b, the UE 10 includes the transceiver unit 101 and the processing unit 102. The transceiver unit may also be referred to as a transceiver, a transceiver, a transceiver apparatus, or the like. Optionally, a component that is in the transceiver unit 101 and is configured to implement a receiving function may be considered as a receiving unit, and a component that is in the transceiver unit 101 and is configured to implement a sending function may be considered as a sending unit. In other words, the transceiver unit 101 includes the receiving unit and the sending unit. For example, the receiving unit may also be referred to as a receiver, a receiver, a receiver circuit, or the like. The sending unit may be referred to as a transmitter, a transmitter, a transmitting circuit, or the like.

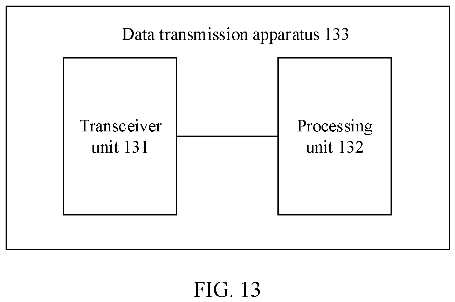

This application further provides a data transmission apparatus. As shown in FIG. 13, the data transmission apparatus 133 may correspond to the internet of things device in FIG. 1 to FIG. 3, or the second terminal device in FIG. 4 to FIG. 10, and the data transmission apparatus 133 includes:
a transceiver unit 131, configured to receive, on a broadcast channel, a broadcast message sent by a second terminal device, and send a first acknowledgment message to the second terminal device on the broadcast channel, where the first acknowledgment message is a response message indicating that the first terminal device successfully receives the broadcast message;
a processing unit 132, configured to: when determining that the broadcast message carries first data, obtain the first data carried in the broadcast message; and
the transceiver unit 131, further configured to report the first data to a corresponding application server.

For description and a specific beneficial effect of the data transmission method performed by the data transmission apparatus, refer to the description of the second terminal device in the foregoing embodiments. Details are not described herein again.

This application further provides a data transmission apparatus. As shown in FIG. 13, the data transmission apparatus 133 may correspond to the relay device in FIG. 1 to FIG. 3, or the first terminal device in FIG. 4 to FIG. 10, and the data transmission apparatus 133 includes:
a processing unit 132, configured to determine a broadcast message;
a transceiver unit 131, configured to send the broadcast message to a first terminal device on a broadcast channel, where the broadcast message carries first data, and the first data is to be reported by the second terminal device to an application server; and
the transceiver unit 131, configured to receive a first acknowledgment message on the broadcast channel, where the first acknowledgment message is a response message indicating that the first terminal device successfully receives the broadcast message.

For description and a specific beneficial effect of the data transmission method performed by the data transmission apparatus, refer to the description of the first terminal device in the foregoing embodiments. Details are not described herein again.

This application further provides a computer readable storage medium including an instruction. When the instruction is run on a computer, the computer is enabled to perform the data transmission method described in the foregoing embodiments.

This application further provides a chip. The chip includes an input interface, an output interface, at least one processor, and at least one memory. The at least one memory is configured to store code, and the at least one processor is configured to execute the code in the memory. When the code is executed, the processor implements the data transmission method described in the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or functions according to the embodiments of the present invention are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center wiredly (for example, a coaxial cable, an optical fiber, or a digital subscriber line) or wirelessly (for example, infrared, radio, and microwave). The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of the process and/or the block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded into a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It should be noted that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data transmission method, comprising:
receiving, by a first terminal device on a broadcast channel, a broadcast message sent by a second terminal device;
sending, by the first terminal device, a first acknowledgment message to the second terminal device on the broadcast channel, wherein the first acknowledgment message is a response message indicating that the first terminal device successfully receives the broadcast message;
obtaining, by the first terminal device, first data carried in the broadcast message when determining that the broadcast message carries the first data; and
reporting, by the first terminal device, the first data to a corresponding application server.

2. The method according to claim 1, wherein the broadcast message comprises first indication information, and the first indication information is used to indicate whether the broadcast message carries the first data.

3. The method according to claim 1 or 2, wherein when the first terminal device receives the broadcast message on the broadcast channel in a Bluetooth low energy manner, the broadcast message is an advertising protocol data unit PDU, and the first acknowledgment message is a scanning request PDU, or the first acknowledgment message is an acknowledgment PDU.

4. The method according to claim 3, wherein the first indication information is at least one of a PDU type field, an advertising data type field, an advertising data field, an advertising data information field, and a universally unique identifier that are of the advertising PDU.

5. The method according to any one of claims 1 to 4, wherein the receiving, by a first terminal device on a broadcast channel, a broadcast message sent by a second terminal device comprises:
receiving, by an air interface layer of the first terminal device on the broadcast channel, the broadcast message sent by the second terminal device.

6. The method according to claim 5, wherein the sending, by the first terminal device, a first acknowledgment message to the second terminal device on the broadcast channel comprises:
sending, by the air interface layer, the first acknowledgment message to the second terminal device on the broadcast channel after receiving the broadcast message.

7. The method according to claim 5, wherein the sending, by the first terminal device, a first acknowledgment message to the second terminal device on the broadcast channel comprises:
sending, by the air interface layer, broadcast data in the broadcast message to an upper layer of the first terminal device;
sending, by the upper layer, second indication information to the air interface layer after receiving the broadcast data, wherein the second indication information is used to instruct the air interface layer to send the first acknowledgment message; and
sending, by the air interface layer, the first acknowledgment message on the broadcast channel after receiving the second indication information.

8. The method according to claim 6 or 7, wherein the reporting, by the first terminal device, the first data to a corresponding application server comprises:
reporting, by the first terminal device, the first data to the corresponding application server when receiving, on the broadcast channel, a second acknowledgment message sent by the second terminal device, wherein the second acknowledgment message is a response message indicating that the second terminal device successfully receives the first acknowledgment message.

9. The method according to claim 8, wherein the reporting, by the first terminal device, the first data to the corresponding application server when receiving, on the broadcast channel, a second acknowledgment message sent by the second terminal device comprises:
determining, by the first terminal device, whether the second acknowledgment message carries an identifier of the first terminal device when receiving, on the broadcast channel, the second acknowledgment message sent by the second terminal device; and reporting, by the first terminal device, the first data to the corresponding application server when determining that the second acknowledgment message carries the identifier of the first terminal device.

10. The method according to claim 5, wherein the obtaining, by the first terminal device, first data carried in the broadcast message when determining that the broadcast message carries the first data comprises:
sending, by the air interface layer, broadcast data in the broadcast message to an upper layer of the first terminal device;
obtaining, by the upper layer, the first data when determining that the broadcast data comprises the first data; and
the sending, by the first terminal device, a first acknowledgment message to the second terminal device on the broadcast channel comprises:
sending, by the upper layer of the first terminal device, second indication information to the air interface layer after the first terminal device reports the first data to the application server, wherein the second indication information is used to instruct the air interface layer to send the first acknowledgment message; and
sending, by the air interface layer, the first acknowledgment message to the second terminal device on the broadcast channel after receiving the second indication information.

11. A data transmission method, comprising:
sending, by a second terminal device, a broadcast message to a first terminal device on a broadcast channel, wherein the broadcast message carries first data, and the first data is to be reported by the second terminal device to an application server; and
receiving, by the second terminal device, a first acknowledgment message on the broadcast channel, wherein the first acknowledgment message is a response message indicating that the first terminal device successfully receives the broadcast message.

12. The method according to claim 11, wherein the method further comprises:
sending, by the second terminal device, a second acknowledgment message to the first terminal device on the broadcast channel after receiving the first acknowledgment message, wherein the second acknowledgment message is a response message indicating that the second terminal device successfully receives the first acknowledgment message.

13. The method according to claim 11 or 12, wherein the method further comprises:
determining, by the second terminal device when receiving the first acknowledgment message, whether there is new broadcast data to be sent;
sending, by the second terminal device, a new broadcast message when determining that there is new broadcast data to be sent, wherein the new broadcast message carries the new broadcast data; and
stopping, by the second terminal device when determining that there is no new broadcast data to be sent, sending the broadcast message.

14. The method according to claim 13, the stopping, by the second terminal device when determining that there is no new broadcast data to be sent, sending the broadcast message comprises:
when determining that there is no new broadcast data to be sent, stopping, by the second terminal device, sending the broadcast message, and powering off a transceiver; or
when determining that there is no new broadcast data to be sent, stopping, by the second terminal device, sending the broadcast message, and entering a deep sleep state, wherein both a transceiver and a preset communications module of the second terminal device are powered off in the deep sleep state.

15. The method according to any one of claims 11 to 14, wherein the broadcast message comprises first indication information, and the first indication information is used to indicate whether the broadcast message comprises the first data.

16. The method according to claim 15, wherein the first indication information is at least one of a PDU type field, an advertising data type field, an advertising data field, an advertising data information field, and a universally unique identifier that are of an advertising PDU.

17. The method according to any one of claims 11 to 16, wherein when the first terminal device sends the broadcast message on the broadcast channel in a Bluetooth low energy manner, the broadcast message is the advertising protocol data unit PDU, and the first acknowledgment message is a scanning request PDU, or the first acknowledgment message is an acknowledgment PDU.

18. The method according to any one of claims 11 to 17, wherein the second terminal device comprises a wake-up period and a deep sleep period, the wake-up period comprises a plurality of events, each event comprises a sending time period and a listening time period, the second terminal device is in the deep sleep state within a time interval between two adjacent events, the second terminal device is in the deep sleep state in the deep sleep period, and both the transceiver and the preset communications module of the second terminal device are powered off in the deep sleep period.

19. The method according to any one of claims 11 to 18, wherein the receiving, by the second terminal device, a first acknowledgment message on the broadcast channel comprises:
receiving, by an air interface layer of the second terminal device, the first acknowledgment message on the broadcast channel;
the determining, by the second terminal device when receiving the first acknowledgment message, whether there is new broadcast data to be sent comprises:
reporting, by the air interface layer, acknowledgment information in the first acknowledgment message to an upper layer of the second terminal device when receiving the first acknowledgment message; and
determining, by the upper layer when receiving the acknowledgment information, whether there is new broadcast data to be sent;
the sending, by the second terminal device, a new broadcast message when determining that there is new broadcast data to be sent comprises:
sending, by the upper layer, the new broadcast data to the air interface layer when determining that there is new broadcast data to be sent; and
sending, by the air interface layer, the new broadcast message, wherein the new broadcast message carries the new broadcast data; and
the stopping, by the second terminal device when determining that there is no new broadcast data to be sent, sending the broadcast message comprises:
sending, by the upper layer, third indication information to the air interface layer when determining that there is no new broadcast data to be sent, wherein the third indication information is used to instruct the air interface layer to stop broadcasting; and
after receiving the third indication information, stopping, by the air interface layer according to the third indication information, sending the broadcast message.

20. The method according to any one of claims 12 to 19, wherein the second acknowledgment message further comprises an identifier of the first terminal device.

21. A first terminal device, comprising:
a transceiver, configured to receive, on a broadcast channel, a broadcast message sent by a second terminal device, and send a first acknowledgment message to the second terminal device on the broadcast channel, wherein the first acknowledgment message is a response message indicating that the first terminal device successfully receives the broadcast message;
a processor, configured to: when determining that the broadcast message carries first data, obtain the first data carried in the broadcast message; and
the transceiver, further configured to report the first data to a corresponding application server.

22. The device according to claim 21, wherein the broadcast message comprises first indication information, and the first indication information is used to indicate whether the broadcast message carries the first data.

23. The device according to claim 21 or 22, wherein when the first terminal device receives the broadcast message on the broadcast channel in a Bluetooth low energy manner, the broadcast message is an advertising protocol data unit PDU, and the first acknowledgment message is a scanning request PDU, or the first acknowledgment message is an acknowledgment PDU.

24. The device according to claim 23, wherein the first indication information is at least one of a PDU type field, an advertising data type field, an advertising data field, an advertising data information field, and a universally unique identifier that are of the advertising PDU.

25. The device according to any one of claims 21 to 24, wherein when receiving, on the broadcast channel, the broadcast message sent by the second terminal device, the transceiver is specifically configured to:
receive, on a broadcast channel of an air interface layer, the broadcast message sent by the second terminal device.

26. The device according to claim 25, wherein the transceiver sends the first acknowledgment message to the second terminal device on the broadcast channel comprises:
the air interface layer sends the first acknowledgment message to the second terminal device on the broadcast channel after receiving the broadcast message.

27. The device according to claim 25, wherein the transceiver sends the first acknowledgment message to the second terminal device on the broadcast channel comprises:
the air interface layer sends broadcast data in the broadcast message to an upper layer of the first terminal device;
the upper layer sends second indication information to the air interface layer after receiving the broadcast data, wherein the second indication information is used to instruct the air interface layer to send the first acknowledgment message; and
the air interface layer sends the first acknowledgment message on the broadcast channel after receiving the second indication information.

28. The device according to claim 26 or 27, wherein when reporting the first data to the corresponding application server, the transceiver is specifically configured to:
report the first data to the corresponding application server when receiving, on the broadcast channel, a second acknowledgment message sent by the second terminal device, wherein the second acknowledgment message is a response message indicating that the second terminal device successfully receives the first acknowledgment message.

29. The device according to claim 28, wherein the processor is further configured to: when receiving, on the broadcast channel, the second acknowledgment message sent by the second terminal device, determine whether the second acknowledgment message carries an identifier of the first terminal device; and
that the transceiver reports the first data to the corresponding application server when receiving, on the broadcast channel, the second acknowledgment message sent by the second terminal device comprises:
when determining that the second acknowledgment message carries the identifier of the first terminal device, the processor controls the transceiver to report the first data to the corresponding application server.

30. The device according to claim 25, wherein when determining that the broadcast message carries the first data and obtaining the first data carried in the broadcast message, the processor is specifically configured to:
the air interface layer sends broadcast data in the broadcast message to an upper layer of the first terminal device;
the upper layer obtains the first data when determining that the broadcast data comprises the first data; and
that the transceiver sends the first acknowledgment message to the second terminal device on the broadcast channel comprises:
the upper layer of the first terminal device sends second indication information to the air interface layer after the transceiver reports the first data to the application server, wherein the second indication information is used to instruct the air interface layer to send the first acknowledgment message; and
the air interface layer sends the first acknowledgment message to the second terminal device on the broadcast channel after receiving the second indication information.

31. A second terminal device, comprising:
a processor, configured to determine a broadcast message, wherein the broadcast message carries first data, and the first data is to be reported by the second terminal device to an application server; and
a transceiver, configured to send the broadcast message to a first terminal device on a broadcast channel, and receive a first acknowledgment message on the broadcast channel, wherein the first acknowledgment message is a response message indicating that the first terminal device successfully receives the broadcast message.

32. The device according to claim 31, wherein the transceiver is further configured to:
send a second acknowledgment message to the first terminal device on the broadcast channel after receiving the first acknowledgment message, wherein the second acknowledgment message is a response message indicating that the second terminal device successfully receives the first acknowledgment message.

33. The device according to claim 31 or 32, wherein the processor is further configured to:
determine, when the transceiver receives the first acknowledgment message, whether there is new broadcast data to be sent;
send a new broadcast message when determining that there is new broadcast data to be sent, wherein the new broadcast message carries the new broadcast data; and
when determining that there is no new broadcast data to be sent, stop sending the broadcast message.

34. The device according to claim 33, wherein when determining that there is no new broadcast data to be sent and stopping sending the broadcast message, the processor is specifically configured to:
when determining that there is no new broadcast data to be sent, stop sending the broadcast message and power off a transceiver; or
when determining that there is no new broadcast data to be sent, stop sending the broadcast message and enter a deep sleep state, wherein both a transceiver and a preset communications module of the second terminal device are powered off in the deep sleep state.

35. The device according to any one of claims 31 to 34, wherein the broadcast message comprises first indication information, and the first indication information is used to indicate whether the broadcast message comprises the first data.

36. The device according to claim 35, wherein the first indication information is at least one of a PDU type field, an advertising data type field, an advertising data field, an advertising data information field, and a universally unique identifier that are of an advertising PDU.

37. The device according to any one of claims 31 to 36, wherein when the first terminal device sends the broadcast message on the broadcast channel in a Bluetooth low energy manner, the broadcast message is the advertising protocol data unit PDU, and the first acknowledgment message is a scanning request PDU, or the first acknowledgment message is an acknowledgment PDU.

38. The device according to any one of claims 31 to 37, wherein the second terminal device comprises a wake-up period and a deep sleep period, the wake-up period comprises a plurality of events, each event comprises a sending time period and a listening time period, the second terminal device is in the deep sleep state within a time interval between two adjacent events, the second terminal device is in the deep sleep state in the deep sleep period, and both the transceiver and the preset communications module of the second terminal device are powered off in the deep sleep period.

39. The device according to any one of claims 31 to 38, wherein when receiving the first acknowledgment message on the broadcast channel, the transceiver is specifically configured to:
the air interface layer receives the first acknowledgment message on the broadcast channel;
when receiving the first acknowledgment message and determining whether there is new broadcast data to be sent, the processor is specifically configured to:
the air interface layer reports acknowledgment information in the first acknowledgment message to an upper layer of the second terminal device when receiving the first acknowledgment message; and
the upper layer determines, when receiving the acknowledgment information, whether there is new broadcast data to be sent;
when determining that there is new broadcast data to be sent and sending a new broadcast message, the processor is specifically configured to:
the upper layer sends the new broadcast data to the air interface layer when determining that there is new broadcast data to be sent; and
the air interface layer sends the new broadcast message, wherein the new broadcast message carries the new broadcast data; and
when determining that there is no new broadcast data to be sent and stopping sending the broadcast message, the processor is specifically configured to:
the upper layer sends third indication information to the air interface layer when determining that there is no new broadcast data to be sent, wherein the third indication information is used to instruct the air interface layer to stop broadcasting; and
after receiving the third indication information, the air interface layer stops, according to the third indication information, sending the broadcast message.

40. The device according to any one of claims 32 to 39, wherein the second acknowledgment message further comprises an identifier of the first terminal device.

41. A computer readable storage medium, comprising an instruction, wherein when the instruction is run on a computer, the computer is enabled to perform the method according to any one of claims 1 to 20.

42. A chip, wherein the chip comprises an input interface, an output interface, at least one processor, and at least one memory, the at least one memory is configured to store code, the at least one processor is configured to execute the code in the memory, and when the code is executed, the processor implements the method according to any one of claims 1 to 20.
